(19) Europäisches Patentamt / European Patent Office / Office européen des brevets

(11) **EP 1 378 488 B1**

(12) **EUROPÄISCHE PATENTSCHRIFT**

(45) Veröffentlichungstag und Bekanntmachung des Hinweises auf die Patenterteilung:
**02.01.2013 Patentblatt 2013/01**

(51) Int Cl.:
*C01B 3/36* *(2006.01)*        *C01B 3/38* *(2006.01)*
*B01J 8/02* *(2006.01)*        *B01J 8/04* *(2006.01)*

(21) Anmeldenummer: **03014527.0**

(22) Anmeldetag: **04.07.2003**

(54) **Vorrichtung zur Erzeugung von Wasserstoff**

Apparatus for generating hydrogen

Dispositif de génération d'hydrogène

(84) Benannte Vertragsstaaten:
**AT BE BG CH CY CZ DE DK EE ES FI FR GB GR HU IE IT LI LU MC NL PT RO SE SI SK TR**

(30) Priorität: **04.07.2002 DE 10230149**

(43) Veröffentlichungstag der Anmeldung:
**07.01.2004 Patentblatt 2004/02**

(73) Patentinhaber: **SGL Carbon SE**
**65201 Wiesbaden (DE)**

(72) Erfinder:
• **Franz, Marcus**
**86830 Schwabmünchen (DE)**
• **Härtel, Georg**
**09599 Freiberg (DE)**
• **Künzel, Jürgen**
**86672 Thierhaupten (DE)**

(56) Entgegenhaltungen:
| | |
|---|---|
| EP-A- 0 367 352 | WO-A-01/37990 |
| WO-A-02/47805 | DE-A- 3 729 114 |
| FR-A- 2 310 958 | US-A- 3 421 826 |
| US-A- 4 236 899 | US-A- 5 522 723 |
| US-A1- 2002 020 113 | |

**Beschreibung**

Die Erfindung betrifft Vorrichtungen zur Erzeugung von Wasserstoff durch Oxidation von Brennstoffen, welche chemisch gebundenen Wasserstoff enthalten, insbesondere von Kohlenwasserstoffen.

Die Erzeugung von Wasserstoffgas wird nach dem Stand der Technik üblicherweise durch partielle Oxidation von Kohlenwasserstoffen, wie beispielsweise Methan, Propan, Erdgas, flüssigen Kohlenwasserstoffen, oder niederen Alkoholen, usw. ausgeführt. Für die partielle Oxidation eines Kohlenwasserstoffs mit Sauerstoff zur Wasserstofferzeugung gilt allgemein die folgende Gleichung:

$$2C_nH_{2n}+2 + nO_2 \rightarrow 2nCO + 2(n+1)H_2 \text{ (+ Ruß)} \qquad (1)$$

(Siehe z.B. Büchner, Schliebs, Winter, Büchel, Industrielle Anorganische Chemie, 2. durchgesehene Auflage, VCH Verlagsgesellschaft mbH, D-6940 Weinheim, 1986, S. 37 ff.) Die Verbrennungstemperaturen werden im allgemeinen mit 1.200°C bis 1.500°C angegeben. Um der üblicherweise beobachteten Rußbildung entgegenzuwirken, werden bei den bekannten technischen Verfahren Oxidationsmittel eingesetzt, die einen höheren Sauerstoffgehalt als Luft aufweisen. Dennoch kann die Bildung von Ruß als unerwünschtem Nebenprodukt nicht immer vermieden werden. Ein möglicher Grund hierfür ist, dass die Reaktanden, falls die Reaktion bei freier Flammenbildung durchgerührt wird, nur ungenügend durchmischt werden und somit örtlich Sauerstoffmangel auftreten kann. Des weiteren existiert zum Flammenrand hin ein verhältnismäßig hoher Temperaturgradient. Somit ist am kühleren Flammenrand eine vollständige Umsetzung der Reaktanden nicht mehr möglich. Dieses Problem tritt bei der partiellen Verbrennung eines Kohlenwasserstoffes um so deutlicher hervor, weil hier der Reaktionsmechanismus, nämlich die Unterdrückung der Oxidation von CO zu $CO_2$, zu niedrigeren Temperaturen und somit zu einer Verlangsamung der Reaktion führt. Dies geschieht wiederum vor allem am kälteren Flammen- bzw. Brennkammerrand.

Der Rußbildung kann durch Anreicherung der Verbrennungsluft mit Sauerstoff bzw. durch die Verwendung reinen Sauerstoffs als Oxidationsmittel entgegengewirkt werden. Durch diese Maßnahme steigt die Verbrennungstemperatur an, und die Rußbildung wird vermindert. Die Verwendung reinen Sauerstoffs oder mit Sauerstoff angereicherter Luft ist jedoch verfahrenstechnisch mit einem zusätzlichen Aufwand und höheren Kosten verbunden.

Allgemein wird bei den verschiedenen Verfahren zur Herstellung von Wasserstoff eine möglichst hohe Wasserstoffausbeute angestrebt. Hieraus ergibt sich die Forderung nach einer möglichst geringen Luftzahl $\lambda$. Für Methan als Brennstoff ergibt sich gemäß vorstehender Formel (1) für $\lambda$ ein Minimalwert von 0,25. Hierbei besteht jedoch das Problem, dass bei niedrigem $\lambda$ Rußbildung auftritt. Somit stehen die Forderungen nach einer möglichst geringen Rußbildung und einer möglichst hohen Wasserstoffausbeute einander entgegen. Ein Ziel bei einem Verfahren zur Erzeugung von Wasserstoff ist es, diese beiden Forderungen weitestgehend zu erfüllen, d.h. $\lambda$ möglichst niedrig zu halten, ohne dass Rußbildung auftritt.

In der EP 0 553 924 ist ein Verfahren zur partiellen Oxidation beschrieben, gemäß dem in einem ersten Schritt eine Schüttung vorgewärmt wird. Danach wird ein Strom aus Kohlenwasserstoffen mit Luft vorgemischt und über die heiße Schüttung geleitet, wobei bei den erwünscht niedrigen $\lambda$-Werten Ruß auf der Schüttung abgeschieden wird. Ab einem gewissen Temperaturniveau wird dann weitgehend reiner Sauerstoff über den auf der Schüttung abgeschiedenen Ruß geleitet, der durch diese Maßnahme oxidiert. Ein Nachteil dieses Verfahrens liegt darin, dass die geschilderte Art der Wasserstoffproduktion ein diskontinuierliches Verfahren darstellt. Darüber hinaus benötigt dieses Verfahren reinen Sauerstoff als Oxidationsmittel.

Das Problem der Rußbildung bei der partiellen Oxidation von Kohlenwasserstoffen war in der Vergangenheit Gegenstand zahlreicher Untersuchungen. Insbesondere wurde das Phänomen der Rußbildung in Abhängigkeit vom stöchiometrischen Verhältnis $\phi$ zwischen der tatsächlichen Brennstoffmenge und der stöchiometrisch idealen Brennstoffmenge, bzw. in Abhängigkeit von dessen Kehrwert, der Luftzahl $\lambda$, untersucht. Beispiele hierfür sind die folgenden Fachartikel:

H. Kremer, M. Flamme (1984), Unterstöchiometrische Verbrennung von Kohlenwasserstoffgasen zur Schutzgaserzeugung, gwf gas/erdgas, Vol. 125, Heft 4, S. 187-193. In diesem Artikel wird die Rußbildungsgrenze beim Einsatz von Methan bzw. von Erdgas ohne Luftvorwärmung mit $\lambda = 0,6$ angegeben. Diese Grenze sinkt bei einer Vorwärmung der Luft auf 400°C bis zu einem Wert $\lambda = 0,54$ ab.

H.F. Calcote, D.B. Olson (1982), Importance of Temperature on Soot Formation in Premixed Flames, Combustion Science and Technology, Vol. 28, pp. 315-317. In diesem Artikel wird neben den bekannten Zusammenhängen die erhöhte Tendenz zur Rußbildung bei Brennstoffen mit höherer Flammentemperatur beschrieben.

A. Jess (1991), Synthesegaserzeugung durch katalytische partielle Oxidation von Methan mit Luft, Dissertation Universität Fridericiana Karlsruhe. Hier wurde die Rußbildungsgrenze unter Einsatz eines hochturbulenten Drallbrenners untersucht. Beim Einsatz von Methan als Kohlenwasserstoff und ohne Luftvorwärmung lag die Rußbildungsgrenze bei $\lambda = 0,6$. Als theoretische Grenze aus kinetischen Überlegungen wird $\lambda = 0,46$ angegeben. Gemäß dieser Untersuchung nimmt die Rußbildung bei adiabatischen Temperaturen bis zu 1.400°C zu, während sie bei noch höheren Temperaturen wieder absinkt.

H.F. Calcote, D.M. Manos (1983), Effect of Molecular Structure on Incipient Soot Formation, Combustion and Flame, Vol. 49, pp. 289-304. Hier ist eine Übersicht über die Rußbildungsgrenze bei verschiedenen Brennstoffen angegeben.

Den genannten Studien ist zu entnehmen, dass die erreichbaren Luftzahlen $\lambda$, bei Verfahren unter Einsatz der partiellen Oxidation generell einen minimalen Wert aufweisen, unterhalb dessen die Rußbildung einsetzt. Für den Fall der Methanverbrennung wird diese minimale Luftgrenze in der Literatur mit Werten zwischen 0,55 und 0,66 angegeben. Aufgrund der Absetzung des Rußes in den entsprechenden Anlagen können die Verfahren der partiellen Oxidation unterhalb dieser Grenze nicht mehr eingesetzt werden.

Die genannten Artikel zeigen, dass die untere Luftzahlgrenze für die Rußbildung mit steigender Flammentemperatur bei gleichem Brennstoff (d.h. beispielsweise bei Luftvorwärmung und/oder Verbrennung mit geringeren Stickstoffkonzentrationen = Sauerstoffanreicherung) sinkt, während beim Einsatz unterschiedlicher Brennstoffe eine brennstoffabhängige Steigerung der Flammentemperatur auch eine Steigerung der Luftzahlgrenze für die Rußbildung bewirkt. Die genannten Abhängigkeiten gelten dabei nur für die Fälle, in denen die Brennstoffe bereits zu Beginn des Verfahrens mit Luft vorgemischt werden. In Diffüsionsflammen hingegen zeigt sich eine erhöhte Tendenz zur Rußbildung bei einer Erhöhung der Reaktionstemperatur.

Eine Möglichkeit der Vermeidung von Rußbildung stellt der Einsatz von Katalysatoren dar. Hierdurch wird es auch ermöglicht, die Wasserstoffausbeute zu steigern. Unter Einsatz von Katalysatoren lassen sich niedrigere Luftzahlen als die vorstehend angegebenen erreichen. Entsprechende Verfahren sind beispielsweise in den folgenden Artikeln angegeben:

S. Frini, G. Calogero, S. Cavallaro (2000), Hydrogen production from methane through catalytic partial oxidation reactions, Journal of Power Sources, Vol. 87, pp. 28-38. C.R.H. de Smet et al. (2001), Design of adiabatic fixed-bed reactors for the partial oxidation of methane to synthesis gas. Application to production of methanol and hydrogen-for-fuelcells, Chemical Engineering Science, Vol. 56, pp. 4849-4861.

Beim Einsatz von Katalysatoren treten jedoch andere Nachteile auf, wie z.B. die sogenannte "Katalysatorvergiftung", die Empfindlichkeit von Katalysatoren gegenüber Übertemperatur, Fremdstoffen, wie Schwefel und dessen Verbindungen, und geringsten Rußkonzentrationen. Darüber hinaus erfordern Reaktoren mit Katalysatoren besondere Maßnahmen beim Anfahren.

In dem Artikel Hydrogen Production by Methane-Rich Combustion in a Ceramic Burner, Journal of Chemical Engineering of Japan, Vol. 35, No. 1, pp. 46-56, ist ein Verfahren unter Einsatz partieller Oxidation angegeben, bei dem der Reaktor als Oberflächen-Strahlungsbrenner ausgebildet ist. Der Oberflächen-Strahlungsbrenner besteht aus einer feinen porösen Struktur. Es wird kein Katalysator eingesetzt. Bei dem beschriebenen Reaktor läuft der Hauptteil der Verbrennungsreaktionen außerhalb des porösen Körpers ab, wie es für Oberflächen-Strahlungsbrenner üblich ist. Die Rußbildungsgrenze bei der Methanverbrennung wurde bei diesem Verfahren mit $\lambda$ = 0,66 angegeben. Es wurden auch Versuche mit niedrigerer Luftzahl ($\lambda$ = 0,5) ausgeführt, um die Wasserstoffausbeute zu erhöhen. Hierbei setzte jedoch Rußbildung ein. Die Tatsache, dass die Rußbildungsgrenze im Vergleich zu Reaktoren mit freier Flammenbildung bei höherer Luftzahl liegt, lässt sich dadurch erklären, dass es bei Oberflächen-Strahlungsbrennem zu einer Abkühlung der Reaktionszone aufgrund der Abstrahlung der Brennoberfläche kommt.

Es ist die Aufgabe der Erfindung, eine Vorrichtung zur Erzeugung von Wasserstoff durch Oxidation von Brennstoffen anzugeben, die chemisch gebundenen Wasserstoff enthalten, bei dem auch bei niedrigen Luftzahlen die Bildung von Ruß vermieden wird, wobei gleichzeitig eine hohe Wasserstoffausbeute erzielt werden soll.

Erfindungsgemäß wird diese Aufgabe durch eine Vorrichtung nach Anspruch 1 gelöst.

Im Rahmen der vorliegenden Erfindung ist mit "partieller Oxidation" von kohlenwasserstoffhaitigen Brennstoffen jede Reaktion gemeint, bei der die Luftzahl kleiner als 1 ist.

Es existieren verschiedene Möglichkeiten der Stabilisierung von Verbrennungsreaktionen in porösen Medien, die prinzipiell in zwei verschiedene Kategorien eingeteilt werden:

Die erste Möglichkeit besteht darin, die Verbrennung derart strömungstechnisch zu stabilisieren, dass die Strömungsgeschwindigkeit an einer bestimmten Stelle im Brenner größer ist als die Flammenausbreitungsgeschwindigkeit, um so eine unerwünschte Ausbreitung der Flammen entgegen der Strömungsrichtung zu verhindern (US Patent No. 755376, Serial No. 70230; US Patent No. 755377, Serial No. 70230, beide C.E. Lücke; beide 1901; Deutsche Patentschrift 1303596, 1966;). Dies kann z.B. durch eine plötzliche Querschnittserweiterung erfolgen, vor welcher die Strömungsgeschwindigkeit größer ist als die Flammenausbreitungsgeschwindigkeit und nach welcher sie kleiner ist. Das gleiche Prinzip funktioniert ebenfalls bei einer kontinuierlichen Querschnittserweiterung, mit dem Unterschied, dass sich die Flamme dann je nach Strömungsgeschwindigkeit an unterschiedlicher Stelle stabilisiert (US Patent No. 1015261, Serial No. 595438, 1912, W.A. Bone). Eine weitere Möglichkeit, den Unterschied zwischen Flammenausbreitungs- und Strömungsgeschwindigkeit zu nutzen, ist die variable Einstellung unterschiedlicher Ströme von Gas und Luft z.B. unter Nutzung von Temperaturmessungen im porösen Material (US Patent No. 5165884, datiert 1992; EP 524736A2; datiert 1993).

Die zweite Möglichkeit der Stabilisierung von Verbrennungsreaktionen in porösen Medien besteht darin, das Gasgemisch kurz vor dem gewünschten Verbrennungsort genügend zu kühlen. Dies kann z.B. durch aktive Kühlungsmaßnahmen wie wassergekühlte Rohre (US Patent No. 1225381, Serial No. 11363, 1995) oder durch Kühlflächen (Schwank, G. Gasheizung und Strahlung, 90. Jahrgang. Heft 8, 1949, S. 169 - 174) geschehen. Eine spezielle und vorteilhafte Art der Stabilisierung von Verbrennungsreaktionen in porösen Medien aufgrund thermischer Effekte basiert darauf, dass für die Flammenausbreitung in einer porösen Struktur ein gewisses Mindestverhältnis von Wärmeproduktion durch die Verbrennung zu Wärmeabfuhr durch das umgebende Medium gewährleistet sein muss. Dieses Verhältnis lässt sich durch eine modifizierte Péclet-Zahl Pe angeben, die nicht mit der Strömungsgeschwindigkeit, sondern mit der laminaren Flammengeschwindigkeit des Brennstoff-Luft-Gemisches $S_1$ gebildet wird.

$$Pe = \frac{S_1 d_{P,eff} \, \rho_f \, c_{p,f}}{\lambda_f} = \frac{S_1 d_{P,eff}}{a_f} \qquad (2)$$

Des Weiteren gehen in Gleichung (2) eine effektive Porengröße $d_{P,eff}$ sowie als Stoffwert letztlich die Temperaturleitfähigkeit des Gasgemisches $a_f$ ein. Es existiert eine kritische Péclet-Zahl, die für Kohlenwasserstoffe im Allgemeinen einen Wert von ca. 65 hat, oberhalb derer eine Flammenausbreitung im porösen Material möglich ist, unterhalb derer jedoch Flammenlöschung auftritt. In der erfindungsgemäßen Vorrichtung ergibt sich durch eine Erhöhung der Porengröße in Strömungsrichtung anfangs (bei kleiner Porengröße) eine Zone mit unterkritischer Péclet-Zahl, in der die Flammen gelöscht werden. Mit steigender Porengröße wird eine Zone mit überkritischer Péclet-Zahl erzeugt, in der sich die Flammen ausbreiten können. Durch diese Stabilisierungsmethode lässt sich eine selbststabilisierende Flammenfront erzeugen. Diese Möglichkeit der Verbrennungsstabilisierung in einem porösen Brenner ist z.B. in EP 0657011 B1 beschrieben und erscheint oft vorteilhaft, da die Stabilisierung in einem weiten Bereich unabhängig von der Strömungsgeschwindigkeit ist und somit einen weiten Bereich von Durchsätzen erlaubt.

Der Einsatz eines offenporigen makroporösen Materials mit sich ändernder Porengröße, das an einer inneren Grenzfläche eine kritische Péclet-Zahl aufweist, ermöglicht eine äußerst stabile Prozessführung, auch bei vergleichweise niedrigen Luftzahlen, ohne dass Ruß entsteht. Hierdurch können die produzierte Wasserstoffkonzentration sowie die Wasserstoffausbeute gesteigert werden. Dies führt zu einer Absenkung der Verbrennungs- und somit auch der Reaktortemperatur, so dass beispielsweise metallische Materialien als offenporiges makroporöses Material verwendet werden können. Es hat sich herausgestellt, dass die Luftzahlgrenze, unterhalb der Rußbildung einsetzt, ohne den Einsatz von Katalysatoren auf Werte um $\lambda = 0,45$ und sogar darunter abgesenkt werden konnte. Durch Extrapolation der ermittelten Werte ist zu erwarten, dass bei gezielter Optimierung des geschilderten Verfahrens ohne Katalysator sogar Werte um $\lambda = 0,4$ erreicht werden können. Diese erstaunlich niedrigen Werte gehen offenbar auf die innerhalb des porösen Materials herrschenden Wärmetransportmechanismen zurück: Durch den Einsatz des offenporigen makroporösen Materials mit den angegebenen Eigenschaften wird die Homogenität des Temperaturfeldes innerhalb der Verbrennungszone erhöht. Hierdurch wird eine Fahrweise ermöglicht, die viel näher an der Rußgrenze liegt als bei sonstigen Reaktoren, die größeren Temperatur- und Konzentrationsschwankungen unterliegen. Des weiteren steigt die oxidative Umsetzung von Rußvorläufern bei höheren Temperaturen mehr als deren Bildungsrate. Dies ist der allgemeine Grund, weshalb die untere Luftzahlgrenze für die Rußbildung mit steigender Flammentemperatur bei gleichem Brennstoff absinkt. Sind jedoch in einem Reaktor zur partiellen Oxidation mit freien Flammen Rußkeime vorhanden, so sinkt deren Temperatur aufgrund der freien Abstrahlung abrupt, weswegen die Rußbildung begünstigt wird. In einem stabilisierten porösen Reaktor befinden sich dagegen alle Rußvorläufer in einem thermischen Gleichgewicht mit der porösen Struktur, weswegen sich Rußkeime nicht über eine freie Abstrahlung abkühlen können.

Das verwendete offenporige makroporöse Material kann einen kontinuierlichen Übergang von Poren mit kleinem Durchmesser zu Poren mit größerem Durchmesser im Innern des Reaktors aufweisen, wobei dann die Flammenentwicklung bei einem charakteristischen Porendurchmesser mit der kritischen Péclet-Zahl beginnt. Bei verschiedenen Brennstoff-/Luftgemischen kann die kritische Péclet-Zahl aber auch variieren. Das hätte bei kontinuierlicher Steigerung der Porengröße des porösen Materials den Nachteil, dass sich die Flamme bei unterschiedlichen Bedingungen verschieben könnte. Um eine definierte Position für die Flammenentwicklung zu schaffen, ist es deshalb vorteilhaft, dass zwei hinter einander liegende Zonen unterschiedlicher Porengröße vorhanden sind, wobei die dem Einlass nachgeordnete erste Zone eine Péclet-Zahl für die Flammenentwicklung hat, die kleiner als die kritische Péclet-Zahl ist, und die vom Einlass weiter entfernte zweite Zone eine Péclet-Zahl aufweist, die größer als die kritische Péclet-Zahl ist. Aufgrund dieser Maßnahme ist die Flammenentstehung auf die Fläche bzw. den Bereich zwischen den beiden Zonen festgelegt, und zwar im wesentlichen unabhängig von Betriebsparametern, die zu einer Variation der kritischen Péclet-Zahl führen könnten. Die genannte Maßnahme zur Festlegung des Ortes der Flammenentstehung erhöht also weiter die Stabilität. Bezüglich weiterer Details für die Ausbildung der Zonen im Reaktor sei auf die EP 0 657 011 B1 verwiesen.

Als Oxidationsmittel kann Umgebungsluft eingezetzt werden. Eine Anreicherung mit Sauerstoff ist nicht erforderlich. Dabei kann im allgemeinen eine Wasserstoffausbeute, bezogen auf den in den Brennstoffen gebundenem Wasserstoff, von mindestens 70% erzielt werden, ohne dass dabei Rußbildung auftritt. Die Verwendung von Luft hat zum einen den Vorteil einer besonders wirtschaftlichen Verfahrensführung und hat des weiteren niedrige adiabatische Verbrennungstemperaturen zu Folge. Die Reaktion kann sogar noch auf einem Temperatumiveau aufrechterhalten werden, welches in der Nähe der Mindestzündtemperatur für das Reaktionsgemisch liegt. Selbstverständlich ist es jedoch auch möglich, Sauerstoff oder mit Sauerstoff angereicherte Luft als Oxidationsmittel zu verwenden.

Die Vorwärmung kann z.B. über einen Wärmeübertrager ablaufen, der in der heißen Reaktionszone eingebettet oder im heißen Gasstrom plaziert ist und durch den das Oxidationsmittel und/oder der wasserstoffhaltige Brennstoff geleitet wird. Eine weitere Möglichkeit der Vorwärmung besteht darin, die erste Zone, die als Flammensperre dient, derart hinsichtlich ihrer Wärmetransporteigenschaften auszuführen, dass ein genügender Teil der Reaktionswärme entgegen der Strömungsrichtung direkt aus der Reaktionszone abgeleitet wird. Mit dieser Wärme kann dann das durch die Flammensperre strömende Eduktgemisch in der Flammensperre bereits vor der Reaktionszone aufgeheizt werden. Eine Kombination beider Vorwärmetechniken ist ebenfalls möglich. Auf diese Weise kann die Reaktionstemperatur so geführt werden, dass eine Optimierung der Wasserstoffausbeute erreicht wird. Der Grund hierfür liegt darin, dass das chemische Gleichgewicht alleine aufgrund der Temperaturerhöhung in das Gebiet mit einer erwünscht hohen Wasserstoffausbeute verschoben wird, wobei die chemische Zusammensetzung des Brennstoffes und/oder des Oxidationsmittels nicht geändert werden muss.

Gemäß einer Ausführungsform kann das offenporige makroporöse Material mindestens einer der Zonen des Reaktors eine Schüttung von keramischen feuerfesten Materialien enthalten. Denkbare poröse Materialien sind in diesem Zusammenhang beispielsweise keramische Füllkörper in Form von Ringen, Kugeln, offenporigen Schäumen oder auch in Form von anderen geordneten keramischen Strukturen.

Gemäß einer Alternative kann das poröse Material mindestens einer der Zonen des Reaktors auch ein strukturiertes Metall enthalten. Metall hat den Vorteil besonders hoher Wärmeleitfähigkeit, so dass sich sehr rasch ein homogenes Temperaturfeld einstellt. Denkbare Metallstrukturen umfassen beispielsweise Gitter, Gewebe, Mischerstrukturen oder offenporige Schäume aus Metall.

Für die erfindungsgemäße Vorrichtung bestehen zahlreiche Anwendungsmöglichkeiten. Zum einen ist hier die chemische Prozesstechnik zu nennen. Es kann sich dabei um die

Wasserstofferzeugung für diverse großtechnische chemische Prozesse handeln, wie z.B. die Erhöhung des $H_2$-Massenstromes in HCl-Syntheseanlagen sowie die $H_2$-Erzeugung in kompakten Anlagen, um Spitzenlastanforderungen zu erfüllen.

Ein weiterer Bereich für den Einsatz der erfindungsgemäßen Vorrichtung, der zunehmend an Bedeutung gewinnt, liegt in der Brennstoffaufbereitung für Brennstoffzellen (BZ). Brennstoffzellen werden üblicherweise in kleineren und mittleren Leistungen für den Einsatz in Kraftfahrzeugen sowie für die dezentrale Strom- und Wärmeerzeugung eingesetzt und befinden sich zur Zeit im fortgeschrittenen Entwicklungsstadium. Für die Erzeugung des von der Brennstoffzelle benötigten Wasserstoffes wird herkömmlicherweise ein sogenannter Reformer eingesetzt. Dabei wird je nach Brennstoffzellen- und Reformer-Typ ein sogenannter "Startbrenner" benötigt, der das Brennstoffzellensystem und die Reformiertechnik auf die benötigte Ausgangstemperatur bringt. Ein solcher Startbrenner kann als Reformer für die Brennstoffzelle entfallen. Hierzu muss beim Systemstart lediglich so modifiziert werden, dass überstöchiometrische Randbedingungen für die Oxidation herrschen, wobei nach dem Systemstart zu einer unterstöchiometrischen Fahrweise übergegangen werden kann, so dass der gesamte Reformierprozess oder ein Teil desselben ausgeführt wird.

Unter Einsatz der vorerwähnten porösen Struktur kann auch eine Restgasverbrennung der brennbaren Reste aus der Brennstoffzelle und dem Reformer sicher und stabil erfolgen.

Eine besonders geeignete Vorrichtung zur Erzeugung von Wasserstoff durch Oxidation von Brennstoffen, die chemisch gebundenen Wasserstoff enthalten, weist einen Reaktor auf, welcher ein poröses Material enthält, wobei der Reaktor als Rohrreaktor ausgebildet ist, welcher einen zentralen Hohlraum zum Einleiten des Brennstoffes und des Oxidationsmittels aufweist, der sich in Axialrichtung erstreckt und radial außen von einer ersten Wand begrenzt wird, die das poröse Material aufweist, und wobei die erste Wand radial außen von einer zweiten Wand begrenzt wird, die ein weiteres poröses Material enthält.

Eine Stabilisierung im erfindungsgemäßen Reaktor kann zum einen dadurch stattfinden, dass das Material feine Bohrungen aufweist, so dass die Strömungsgeschwindigkeit im Material bzw. in den Bohrungen eine Flammenausbreitung gegen die Strömungsrichtung verhindert.

Bei dem erfindungsgemäßen Reaktor sind die beiden porösen Materialien, an deren Grenzfläche sich die kritische Péclet-Zahl einstellt, an einander angrenzend und konzentrisch um die zentrale Längsachse des Rohrreaktors vorhanden. Bei der Durchführung der Reaktion werden das Oxidationsmittel sowie der Brennstoff in den zentralen Hohlraum eingeleitet und strömen dann durch die beiden porösen Wände radial nach außen. Innerhalb der ersten Wand ist die Péclet-Zahl kleiner als der kritische Wert, weswegen eine Flammenausbreitung nicht möglich ist. Innerhalb des porösen Materials der zweiten Wand ist die Péclet-Zahl größer als der kritische Wert, so dass eine Verbrennung erfolgen kann.

Gemäß einer bevorzugten Ausführungsform ist die Außenwand des Reaktors als Doppelrohr für die Aufnahme eines Kühlmittels ausgeführt. Auf diese Weise können die entstehenden Gase vor ihrem Austritt aus dem Reaktor abgekühlt werden. Das Doppelrohr kann vorteilhaft auf der Reaktorseite mit Rippen versehen sein, so dass die Wärme aus dem Reaktionsgemisch (nicht dargestellt) besser abgeführt wird.

Zur nachfolgenden Umsetzung des entstehenden CO weist die erfindungsgemäße Vorrichtung eine weitere Wand aus einem porösen Material auf, die sich in einem Abstand radial außen und im wesentlichen parallel zur zweiten Wand erstreckt. Mit anderen Worten ist zwischen der zweiten und der dritten Wand ein konzentrischer Hohlraum ausgebildet. In diesen Hohlraum münden Zuleitungsrohre für die Zufuhr von sauerstoffhaltigen Gasen und/oder Wasserdampf . Die eingeleiteten zugeführten Gase bzw. der Wasserdampf strömen zusammen mit den Produktgasen der partiellen Oxidationsreaktion radial nach außen durch die dritte Wand.

Das poröse Material der zweiten Wand kann katalytisch wirkende Strukturen enthalten. Hierbei kann es sich beispielsweise um eine katalytische Beschichtung des porösen Materials handeln. In ähnlicher Weise ist es auch möglich, das poröse Material der dritten Wand mit einer katalytisch wirkenden Struktur auszubilden, die in der Lage ist, CO mittels Wasserdampf zu $H_2$ und $CO_2$ umzusetzen.

Um Katalysatoren einsetzen zu können, die auch bei Temperaturen wirksam sind, welche unterhalb der Reaktionstemperatur liegen, wird vorzugsweise um die erste und die zweite Wand herum eine Zwischenkühlung vorgesehen. Diese kann beispielsweise als ein Rohr ausgebildet sein, das in Form einer gestreckten Spirale um die Außenseite der zweiten Wand geschlungen ist. Selbstverständlich sind auch andere Anordnungen eines Kühlrohrs im Raum zwischen der zweiten und der dritten Wand vorstellbar, um die Temperaturen auf vorteilhafte Werte einzustellen.

Häufig wird das erzeugte Wasserstoffgas in Reinform benötigt. In diesem Fall ist bei der erfindungsgemäßen Vorrichtung zwischen der Außenwand und der nächstliegenden inneren Wand eine Membran angeordnet, welche für Wasserstoffgas durchlässig, für die übrigen der bei der Oxidation entstehenden Produkte jedoch undurchlässig ist. Geeignete Membranen sind beispielsweise Metallmembranen der Platingruppe, vorzugsweise aus Palladium. Gemäß einer Alternative ist es jedoch auch möglich, das entstehende Wasserstoffgas mit Hilfe herkömmlicher Verfahren zu reinigen (beispielsweise nach Abtrennung von $CO/CO_2$ mittels Tieftemperatur-Rektifikation).

Eine weitere erfindungsgemäße Vorrichtung zur Erzeugung von Wasserstoff durch Oxidation von Brennstoffen, die chemisch gebundenen Wasserstoff enthalten, weist einen Reaktor auf, welcher ein poröses Material enthält, dessen Porengröße sich in Richtung der Flammenentwicklung zu größeren Poren ändert, wobei eine Grenzfläche innerhalb des porösen Materials eine kritische Péclet-Zahl aufweist, oberhalb der die Flammenentwicklung erfolgt und unterhalb der sie unterdrückt ist, wobei das poröse Material in einer ersten und einer zweiten Zone angeordnet ist, wobei, in Strömungsrichtung gesehen, eine dritte Zone nachgeschaltet ist, welche ebenfalls ein poröses Material aufweist. Die einzelnen Zonen können, anders als bei dem vorstehend geschilderten Reaktor, linear hinter einander angeordnet sein, so dass die Strömungsrichtung in diesem Fall in Axialrichtung durch den Reaktor verläuft. Auch bei dieser Art von Reaktor findet die eigentliche Oxidationsreaktion innerhalb der zweiten Zone statt, wobei die erste Zone, die das poröse Material mit der unterkritischen Péclet-Zahl aufweist, als Flammensperre dient. In der dritten Zone wird das entstandene CO weiter zu $CO_2$ umgesetzt, und zwar räumlich getrennt von der Hauptreaktion. Aus diesem Grunde ist es möglich, den gesamten Reaktionsablauf kontinuierlich zu fahren, so dass keine Unterbrechung des Reaktionsablaufes notwendig ist. Da sich das poröse Material der dritten Zone dennoch innerhalb des Reaktionsraumes des Reaktors befindet, ist dennoch eine sehr kompakte Bauweise möglich.

Zwischen der zweiten und der dritten Zone ist vorzugsweise ein Zwischenraum ausgebildet, in den eine Rohrleitung zum Einführen von Gas und/oder Dampf mündet. Hierdurch wird die Umsetzung von CO zu $CO_2$ durch Einleitung von sauerstoffhaltigem Gas und/oder Wasserdampf begünstigt.

Falls der Einsatz eines Katalysators erwünscht ist, kann auch in diesem Fall das poröse Material der zweiten und/oder der dritten Zone katalytisch wirkende Strukturen enthalten.

Zum Ableiten der Reaktionswärme, die bei der in der zweiten Zone ablaufenden Oxidationsreaktion entsteht, weist die erfindungsgemäße Vorrichtung vorzugsweise ein Wärmetauscherrohr auf. Das Wärmetauscherrohr kann beispielsweise dafür eingesetzt werden, die entstandene Wärme auf den zugeführten Brennstoff und/oder das zugeführte Oxidationsmittel zu übertragen. Des weiteren kann das Rohr dafür eingesetzt werden, die dritte Zone, innerhalb der die Oxidation von CO zu $CO_2$ (mit $H_2O$-Dampf) stattfindet, zu erwärmen und somit die notwendige Aktivierungsenergie für diese Reaktion bereitzustellen.

Allgemein ist anzumerken, dass für den Wärmetransport in den erfindungsgemäßen Reaktoren die poröse Struktur im Reaktionsraum eine entscheidende Rolle spielt. Als vorteilhaft für die poröse Struktur haben sich in diesem Zusammenhang Materialien erwiesen, die bereits bei niedrigen Temperaturen eine hohe Strahlungsintensität aufweisen, also der Wärmetransport erhöht wird. Es kommen hier Metalle in Kugelform, als Gestricke oder Lochblenden und andere poröse Körper, offenporige Schäume (insbesondere bei kleinen Apparaturen) und Schüttungen oder geordnete Pak-

kungen in Frage, wie sie üblicherweise in der thermischen Verfahrenstechnik eingesetzt werden. Als besonders geeignet zeigten sich keramische Werkstoffe, welche auf Mg-, Ca-, Al-, Si- bzw. Zr-Oxid und Zusammensetzungen daraus basieren. Auch Nitride und Carbide können in diesem Zusammenhang eingesetzt werden. Die möglichen Formen für die Füllkörper sind vielfältig, wobei vorzugsweise Hiflow-Ringe, Sattelkörper, Kugeln sowie zylindrische Füllkörper verwendet werden.

Die erfindungsgemäßen Vorrichtungen können als kombinierte Startbrenner und Reformer für die Brennstoffaufbereitung für Brennstoffzellen eingesetzt werden.

Die Erfindung wird nachstehend anhand von Ausführungsbeispielen mit Bezug auf die beigelügte Zeichnung näher erläutert. In der Zeichnung zeigen:

Fig. 1    eine erste nicht erfindungsgemäße Ausführungsform einer Vorrichtung zur Erzeugung von Wasserstoff durch Oxidation von kohlenwasserstoffhaltigen Brennstoffen im Schnitt;

Fig. 2    eine Ausführungsform einer erfindungsgemäßen Vorrichtung zur Erzeugen von Wasserstoff durch Oxidation von Kohlenwasserstoffhaltigen Brennstoffen im Schnitt;

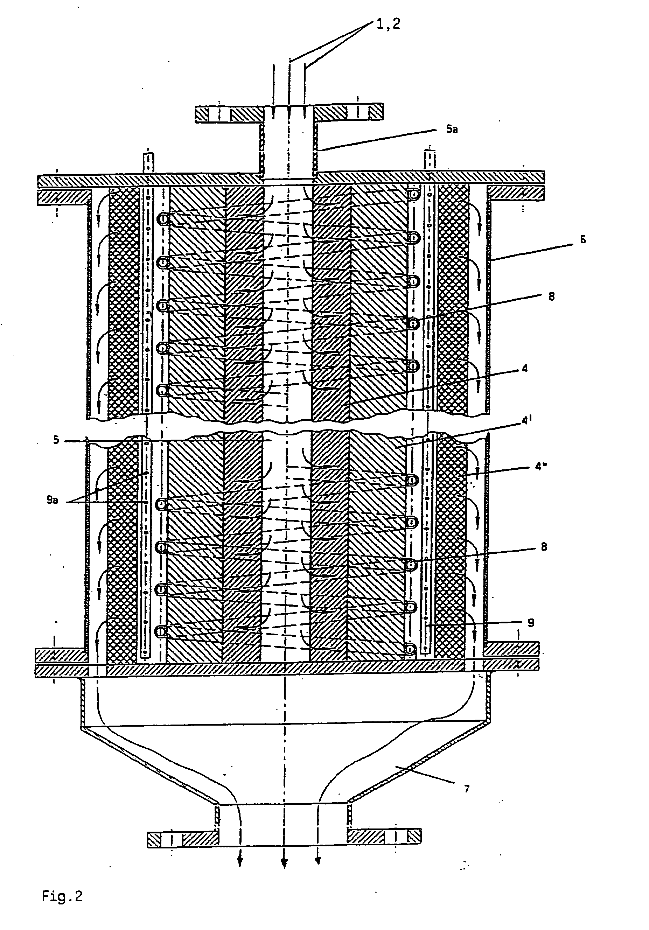

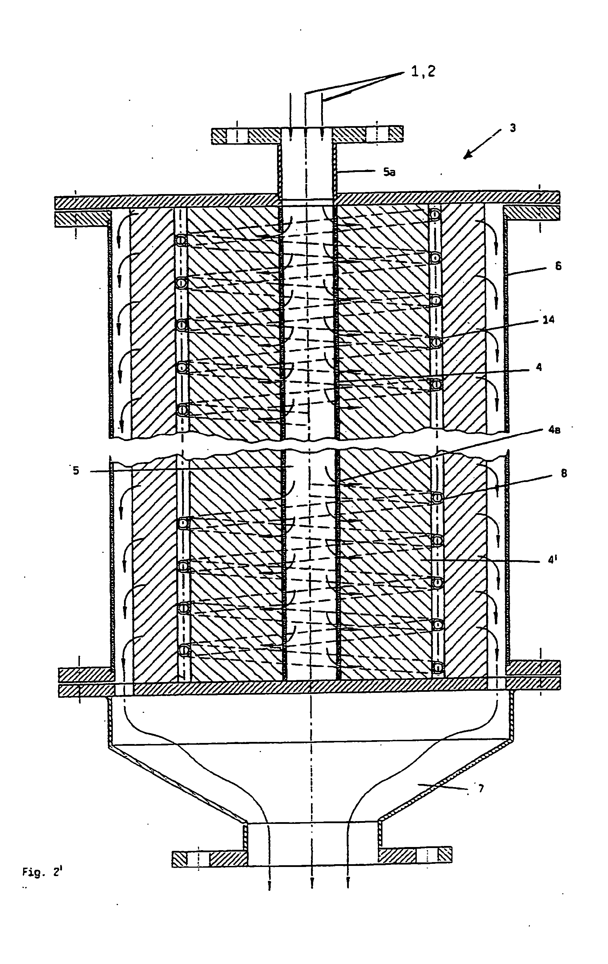

Fig. 2'    eine modifizierte Ausführungsform, die eine andere Möglichkeit der Stabilisierung der Flammenausbreitung darstellt;

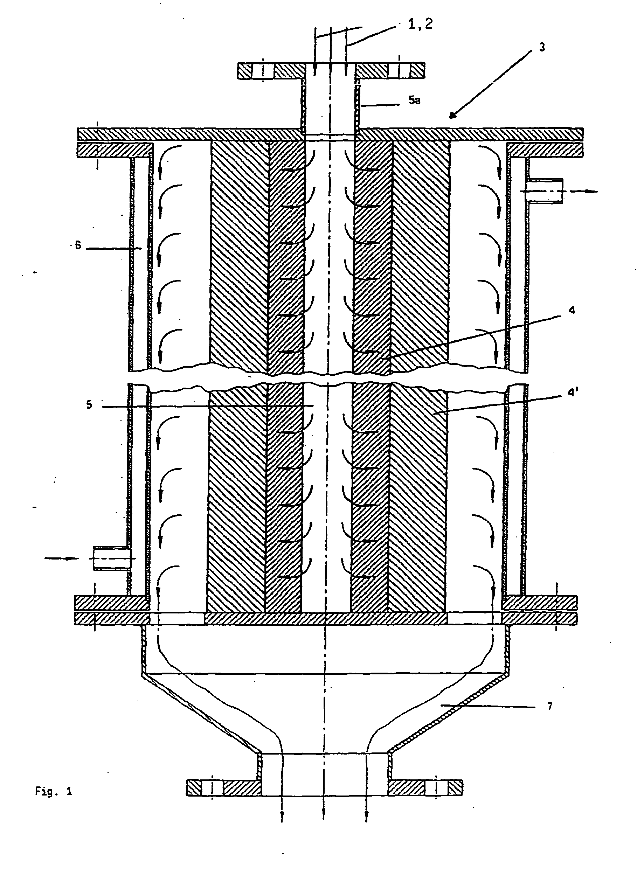

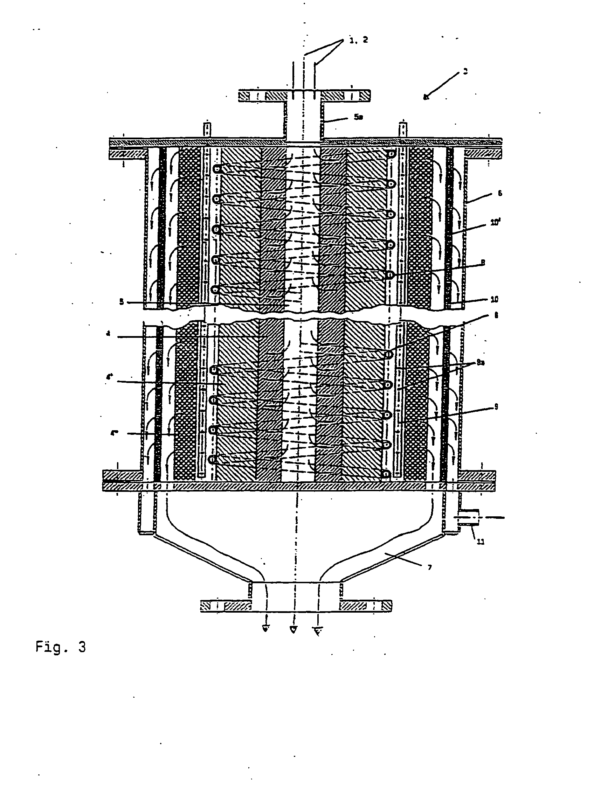

Fig. 3    eine weitere modifizierte Ausführungsform der Vorrichtung von Fig. 1 im Schnitt;

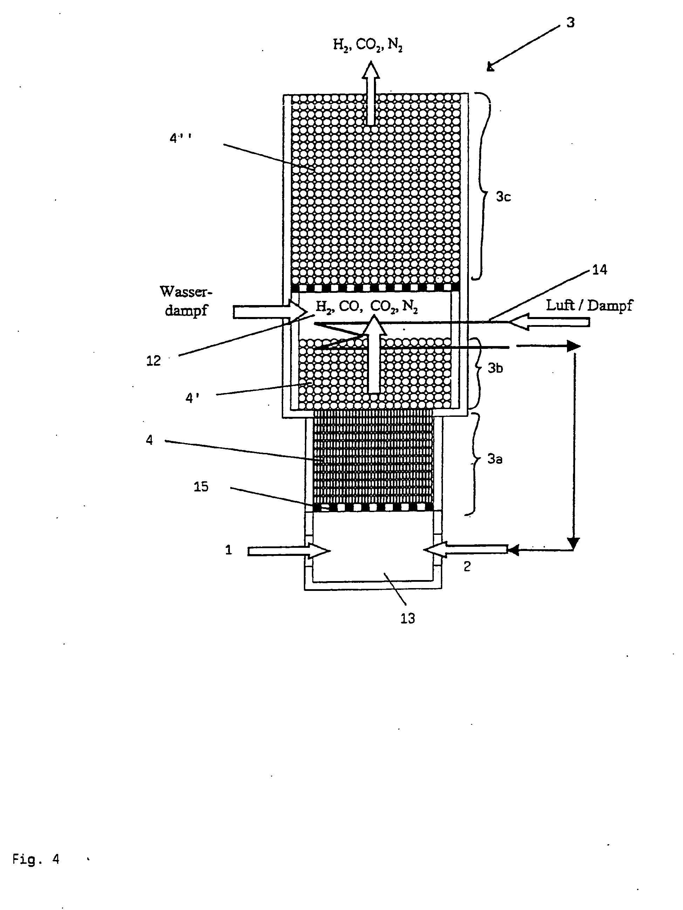

Fig. 4    eine weitere erfindungsgemäße Vorrichtung zur Erzeugung von Wasserstoff durch Oxidation von kohlenwasserstoffhaltigen Brennstoffen.

In den Fig. 1 bis 3 ist jeweils eine Vorrichtung gezeigt, die als Reaktor 3 zur Erzeugung von Wasserstoff durch Oxidation von Brennstoffen, die chemisch gebundenen Wasserstoff enthalten, ausgebildet ist. Der Reaktor 3 weist die Form eines länglichen Rohres auf, in dessen Innenraum sich in Axialrichtung eine erste Wand aus einem ersten porösen Material 4 und, an diese radial außen angrenzend, eine zweite Wand aus einem zweiten porösen Material 4' erstrecken. Die beiden Wände aus den porösen Materialien 4 und 4' umschließen konzentrisch einen sich ebenfalls axial erstreckenden zentralen Hohlraum 5, in den ein Anschlussrohrstück 5a zum Einleiten eines Brennstoffes 1 sowie eines Oxidationsmittels 2 mündet. Die Strömungsrichtungen der Gase sind in den Figuren durch Pfeile angedeutet. Der Reaktor 3 wird radial außen durch eine Außenwand 6 begrenzt, die hier als ein doppeltes Hohlrohr ausgebildet ist, durch das beispielsweise ein Kühlmittel geleitet werden kann.

In der einfachen Ausführungsform der Fig. 1 befinden sich innerhalb des Reaktors 3 lediglich die erste Wand aus dem porösen Material 4 und die zweite Wand aus dem porösen Material 4'. Das erste poröse Material ist so ausgebildet, dass sich eine Péclet-Zahl einstellt, die unterhalb der kritischen Péclet-Zahl liegt, so dass sich innerhalb dieser Wand keine Flamme entwickeln kann. Demgegenüber weist das poröse Material 4' der zweiten Wand eine Péclet-Zahl auf, die größer als die kritische Péclet-Zahl ist, so dass innerhalb dieser Wand eine stabile Verbrennung erfolgt. Die entstandenen Produktgase werden bei der einfachen Ausführungsform der Fig. 1 in Axialrichtung über einen zentralen Sammelraum 7 nach außen abgeleitet.

In Fig. 2 ist eine modifizierte Ausführungsform des Reaktors von Fig. 1 ersichtlich, welcher zusätzlich mit einem Rohr 8 ausgestattet ist, das in Form einer gestreckten Spirale um die beiden inneren Wände aus porösem Material 4, 4' geschlungen ist. Das Rohr 8 dient der Zwischenkühlung der aus der zweiten porösen Wand austretenden Reaktionsprodukte, die gegebenenfalls erforderlich sein kann, wenn für die nachfolgende Umsetzung von CO mittels Wasserdampf ein Katalysator eingesetzt wird. Des weiteren ist in dieser Figur eine dritte Wand aus einem porösen Material 4" zu erkennen, die konzentrisch und mit einem Abstand um die zweite Wand angeordnet ist. Innerhalb dieser Wand findet die weitere Oxidation von CO zu $CO_2$ statt. Um für die in der dritten Wand stattfindenden Reaktionen weitere Reaktionspartner, wie beispielsweise Wasserdampf oder sauerstoffreiche Luft oder dergleichen, zugeben zu können, sind in dem Zwischenraum zwischen der zweiten und der dritten Wand weitere kleine Rohre 9 eingeschoben, welche Bohrungen 9a aufweisen, mittels denen weitere Komponenten zu den radial strömenden Gasen gemischt werden können. In der Ausführungsform von Fig. 2 ist die Außenwand 6 als einfaches Rohr ausgebildet.

In Figur 2' ist ein alternativer Stabilisierungsmechanismus dargestellt. In dieser Figur sind den Elementen, die analog zu denjenigen der Figuren 1 und 2 ausgebildet sind, identische Bezugszeichen zugeordnet. Diese Ausführungsform unterscheidet sich von derjenigen der Figur 2 dadurch, dass in dem Material 4 feine Bohrungen 4a enthalten sind, durch die das Brennstoff-Gasgemisch treten kann. Durch die radial nach außen gerichtete Strömung durch die Bohrungen 4a wird eine Flammenausbreitung gegen die Strömungsrichtung verhindert.

Die Ausführungsform von Fig. 3 ist gegenüber derjenigen von Fig. 2 des weiteren dahingehend modifiziert, dass zwischen die Außenwand 6 und die dritte Wand aus dem porösen Material 4" eine Membran 10, beispielsweise aus Palladium, auf einen porösen Träger 10' gesetzt ist, durch die ausschließlich der erzeugte Wasserstoff treten kann. Auf diese Weise wird der Wasserstoff von den übrigen Gasen abgetrennt und strömt zwischen der Membran 10 und der Außenwand 6 in Axialrichtung, bis er auf eine hier in Radialrichtung aufgesetzte Ableitung 11 trifft, über die er nach außen abgeführt wird, während die übrigen Gase zwischen der Membran 10 und der dritten porösen Wand in Axialrichtung auf den Sammelraum 7 zu und von dort nach außen strömen.

Eine andere Art von Reaktor 3 ist in Fig. 4 schematisch dargestellt. Der Reaktor 3 weist in seinem Innenraum eine erste Zone 3a auf, welche mit dem ersten porösen Material 4 gefüllt ist. Diese Zone wirkt aufgrund der bereits erörterten Porenstruktur des Materials 4 als Flammensperre. In Strömungsrichtung daran angrenzend ist eine zweite Zone 3b angeordnet, die mit dem porösen Material 4' gefüllt ist, dessen Péclet-Zahl oberhalb der kritischen Péclet-Zahl liegt. An Zone 3b anschließend befindet sich ein Zwischenraum 12, in den beispielsweise Wasserdampf eingeleitet werden kann, wie dies in der Zeichnung schematisch durch einen Pfeil dargestellt ist. An den Zwischenraum 12 schließt sich die Zone 3c an, die mit dem porösen Material 4" gefüllt ist. In dieser Zone erfolgt die Oxidation des CO zu $CO_2$ sowie, bei Zuführung von Wasserdampf, die weitere Erzeugung von $H_2$. Im unteren Bereich des Reaktors 3, stromaufwärts der Flammensperre gesehen, befindet sich eine Vormischkammer 13, durch die das Oxidationsmittel 2 sowie der Brennstoff 1 in den Reaktor 3 eintreten. Wie dies in der Figur zu erkennen ist, kann ein Wärmetauschrohr 14 vorhanden sein, um die bei der partiellen Oxidation entstehende Abwärme abzuleiten. Die Abwärme kann insbesondere zur Vorwärmung des Oxidationsmittels verwendet werden, wie dies in der Figur durch die dünnen Pfeile angedeutet ist. Gemäß einer alternativen Ausführungsform, die hier nicht gezeigt ist, kann das Wärmetauscherrohr 14 auch so geführt werden, dass die Abwärme auf die nachgeschaltete Zone 3c übertragen wird, um die Aktivierungsenergie für die dort ablaufenden Reaktionen auf dem entsprechenden Temperaturniveau bereitzustellen. Zum Stützen der porösen Materialien 4, 4', 4" sind geeigneterweise Gitterroste 15 innerhalb des Reaktors 3 angeordnet.

Selbstverständlich ist es auch bei dieser erfindungsgemäßen Vorrichtung möglich, eine Abscheidung des Wasserstoffgases über eine Membran vorzunehmen. Geeignete Anordnungen können vom Fachmann ohne weiteres getroffen werden.

Bei einer Durchführung des Verfahrens in einem Reaktor, wie er in Fig. 4 gezeigt ist, wurden Methan und Luft mit einer Luftzahl von 0,5 verbrannt. Das gemessene $CO/CO_2$-Verhältnis am Gasaustritt des Reaktors betrug 2, entsprechend einer Wasserstoffausbeute, bezogen auf den eingebrachten Kohlenwasserstoff, von ca. 55%. Durch Vorwärmung der Luft auf ca. 180°C konnte bei $\lambda$ = 0,4 ein rußfreies Produktgas mit einer Wasserstoffausbeute von 70% produziert werden. Die Verweilzeit innerhalb der Reaktionszone betrug dabei nur ca. 0,1 Sekunden. Im Gegensatz hierzu benötigen Prozesse des Standes der Technik, wie beispielsweise in der US 4 699 631 beschrieben, eine erheblich höhere Verweilzeit, die bis zu 10 Sekunden beträgt. Es lässt sich somit durch die hier beschriebene neue Vorrichtung und die entsprechende Verfahrensweise ein erheblich größerer Durchsatz bei gleichen Reaktorabmessungen erzielen. Als Grund hierfür sind unter anderem die Wärmetransporteigenschaften in einer porösen Struktur im Gegensatz zu einer frei brennenden Flamme zu sehen.

## Patentansprüche

1. Vorrichtung zur Erzeugung von Wasserstoff durch Oxidation von Brennstoffen, welche chemisch gebundenen Wasserstoff enthalten, aufweisend einen Reaktor (3), mit einem porösen Material (4, 4', 4"), wobei sich die Porosität des Materials (4, 4', 4") in Richtung der Flammenentwicklung zu größeren Poren ändert, wobei das poröse Material (4) mit unterkritischer Péclet-Zahl und das poröse Material (4') mit überkritischer Péclet-Zahl in einer ersten und einer zweiten aneinander angrenzenden Zone (3a, 3b) angeordnet sind, und wobei der zweiten Zone (3b), in Strömungsrichtung gesehen, eine dritte Zone (3c) mit einem porösen Material (4") nachgeordnet ist, **dadurch gekennzeichnet, dass** zwischen den zweiten (3b) und dritten (3c) Zonen ein Zwischenraum (12) ausgebildet ist, in den eine Rohrleitung zum Einführen von Gas und/oder Dampf mündet.

2. Vorrichtung nach Anspruch 1, **dadurch gekennzeichnet, dass** das poröse Material (4', 4") In der zweiten (3b) und/oder dritten Zone (3c) katalytisch wirkende Strukturen enthält.

3. Vorrichtung nach Anspruch 1 oder 2, **dadurch gekennzeichnet, dass** ein Wärmetauscher (14) vorgesehen ist zum Übertragen von Wärme, die bei der in Zone (3b) ablaufenden Oxidationsreaktion entsteht, auf dem zugeführten Brennstoff und/oder das zugeführte Oxidationsmittel.

4. Vorrichtung nach einem der Ansprüche 1 bis 3, **dadurch gekennzeichnet, dass** sie von einer an sich axial In einem Abstand zur nächstliegenden Inneren Wand erstreckenden Außenwand (6) begrenzt wird.

5. Vorrichtung nach einem der Ansprüche 1 bis 4, **dadurch gekennzeichnet, dass** die Außenwand (6) als Doppelrohr für die Aufnahme eines Kühlmittels ausgeführt wird,

6. Verwendung einer Vorrichtung nach mindestens einem der Ansprüche 1 bis 5, als Startbrenner und Reformer für eine Brennstoffzelle.

## Claims

1. An apparatus for generating hydrogen by the oxidation of fuels that contain chemically bound hydrogen, said apparatus comprising a reactor (3) containing a porous material (4, 4', 4"), the porosity of the material (4, 4', 4") changing in the direction of flame development to produce larger pores, the porous material (4) with subcritical Péclet number and the porous material (4') with supercritical Péclet number being arranged in a first and second zone (3a, 3b), which are adjacent to one another, and a third zone (3c) containing a porous material (4") being arranged downstream of the second zone (3b), as viewed in the direction of flow, **characterised in that** a gap (12) is formed between the second zone (3b) and third zone (3c) and a pipeline for introducing gas and/or steam discharges into said gap.

2. The apparatus according to Claim 1, **characterised in that** the porous material (4, 4") in the second zone (3b) and/or third zone (3c) contains catalytically active structures.

3. The apparatus according to Claim 1 or 2, **characterised in that** a heat exchanger (14) is provided to transfer heat produced during the oxidation reaction occurring in zone (3b) to the supplied fuel and/or the supplied oxidation agent.

4. The apparatus according to one of Claims 1 to 3, **characterised in that** it is delimited by an outer wall (6) extending axially at a distance from the nearest inner wall.

5. The apparatus according to one of Claims 1 to 4, **characterised in that** the outer wall (6) is designed as a double pipe for receiving a coolant.

6. Use of an apparatus according to at least one of Claims 1 to 5 as a starting burner and reformer for a fuel cell.

## Revendications

1. Dispositif de production d'hydrogène par oxydation de combustibles qui contiennent de l'hydrogène chimiquement lié, comportant un réacteur (3) avec une matière poreuse (4, 4', 4"), la porosité de la matière (4, 4', 4") variant en pores plus grands en direction du développement de la flamme, la matière poreuse (4) étant disposée avec un nombre de Péclet sous-critique et la matière poreuse (4') avec un nombre de Péclet surcritique dans une première et dans une deuxième zones adjacentes (3a, 3b) et en aval de la deuxième zone (3b), vue dans le sens d'écoulement étant disposée une troisième zone (3c) avec une matière poreuse (4"), **caractérisé en ce qu'**entre la deuxième et la troisième zone (3b et 3c) est conçu un espace intermédiaire (12) dans lequel débouche une canalisation pour l'introduction de gaz et/ou de vapeur.

2. Dispositif selon la revendication 1, **caractérisé en ce que** la matière poreuse (4', 4") dans la deuxième (3b) et/ou dans la troisième zone (3c) contient des structures à action catalytique.

3. Dispositif selon la revendication 1 ou la revendication 2, **caractérisé en ce qu'**il est prévu un échangeur thermique (14) pour la transmission de chaleur qui se développe lors de la réaction par oxydation se déroulant dans la zone (3b) sur le combustible amené et/ou sur l'agent d'oxydation amené.

4. Dispositif selon l'une quelconque des revendications 1 à 3, **caractérisé en ce qu'**il est délimité par une paroi extérieure (6) s'étendant en direction axiale en soi, à une distance de la paroi intérieure la plus proche.

5. Dispositif selon l'une quelconque des revendications 1 à 4, **caractérisé en ce que** la paroi extérieure (6) est réalisée en tant que double tuyau pour recevoir un agent réfrigérant.

6. Utilisation d'un dispositif selon au moins l'une quelconque des revendications 1 à 5 en tant que brûleur de démarrage et reformeur pour une cellule électrochimique.

Fig. 1

Fig.2

Fig. 2'

Fig. 3

H$_2$, CO$_2$, N$_2$

3

4''

3c

Wasserdampf

H$_2$, CO, CO$_2$, N$_2$

14

Luft / Dampf

12

3b

4'

4

3a

15

1

2

13

Fig. 4

**IN DER BESCHREIBUNG AUFGEFÜHRTE DOKUMENTE**

**In der Beschreibung aufgeführte Patentdokumente**

- EP 0553924 A
- US 755376 A
- US 70230 A
- US 755377 A
- WO 1303596 A
- WO 1966 A
- US 1015261 A
- US 595438 A, W.A. Bone
- US 5165884 A
- EP 524736 A2
- US 1225381 A
- US 11363 A
- US 1995 A
- EP 0657011 B1
- US 4699631 A

**In der Beschreibung aufgeführte Nicht-Patentliteratur**

- **BÜCHNER ; SCHLIEBS ; WINTER ; BÜCHEL.** In-dustrielle Anorganische Chemie. VCH Verlagsges-ellschaft mbH, 1986, 37 ff
- **H. KREMER ; M. FLAMME.** *Unterstöchiometrische Verbrennung von Kohlenwasserstoffgasen zur Schutzgaserzeugung, gwf gas/erdgas,* 1984, vol. 125, 187-193
- **H.F. CALCOTE ; D.B. OLSON.** Importance of Tem-perature on Soot Formation in Premixed Flames. *Combustion Science and Technology,* 1982, vol. 28, 315-317
- **A. JESS.** Synthesegaserzeugung durch katalytische partielle Oxidation von Methan mit Luft. *Dissertation Universität Fridericiana Karlsruhe*
- **H.F. CALCOTE ; D.M. MANOS.** Effect of Molecular Structure on Incipient Soot Formation. *Combustion and Flame,* 1983, vol. 49, 289-304
- **S. FRINI ; G. CALOGERO ; S. CAVALLARO.** Hy-drogen production from methane through catalytic partial oxidation reactions. *Journal of Power Sources,* 2000, vol. 87, 28-38
- **C.R.H. DE SMET et al.** Design of adiabatic fixed-bed reactors for the partial oxidation of methane to synthesis gas. Application to production of methanol and hydrogen-for-fuelcells. *Chemical Engineering Sci-ence,* 2001, vol. 56, 4849-4861
- Artikel Hydrogen Production by Methane-Rich Combustion in a Ceramic Burner. *Journal of Chemical En-gineering of Japan,* vol. 35 (1), 46-56
- **SCHWANK, G.** *Gasheizung und Strahlung,* 1949, vol. 90, 169-174